# DEMANDE DE BREVET EUROPEEN

(11) **EP 4 628 525 A1**
(43) Date de publication de la demande: **08.10.2025**
(21) Numéro de dépôt: 25167637.5
(22) Date de dépôt: 01.04.2025
(51) Int. Cl.: C08K 3/04, C08L 23/16, C08L 91/00, C08K 3/34, C08K 5/14, C08L 71/02, C08K 5/101, F16L 11/04, H01M 8/04029

(54) **COMPOSITION DE CAOUTCHOUC ET ARTICLE EN CAOUTCHOUC L'INCORPORANT**

(30) Priorité: 04.04.2024 FR 2403504
(71) Demandeur: HUTCHINSON, 75008 Paris (FR)
(72) Inventeur: BIERCE-ARGY, Gwenaëlle, 45210 FERRIÈRES EN GATINAIS (FR)
(74) Mandataire: Plasseraud IP

(57) **Abrégé**

L'invention concerne une composition de caoutchouc à base d'au moins un copolymère EPM ou un terpolymère EPDM, et un article en caoutchouc l'incorporant, tel qu'un joint d'étanchéité ou un tuyau (10) e.g. pour un circuit d'air, d'eau ou de refroidissement équipant une pile à combustible.

La composition comprend :
- une charge comprenant un noir de carbone et une charge inorganique lamellaire,
- un système d'aide à la mise en œuvre,
- un système plastifiant, et
- un système de réticulation comprenant un peroxyde,
dans laquelle la composition comprend, en fractions massiques :
28-32 % du noir de carbone, lequel est choisi parmi
les noirs de série ASTM N600 ou N700, et
ceux présentant une surface spécifique de 15-25 m²/g, un indice d'adsorption d'iode de 16-24 mg/g et un indice d'absorption de DBP de 90-110 mL/100 g,
10-20 % de la charge inorganique lamellaire,
1,0-6,0 % du système d'aide à la mise en œuvre, lequel comprend un agent de recouvrement du noir de carbone, et
10-22 % du système plastifiant.

## Description

### Domaine technique

L'invention concerne une composition de caoutchouc à base d'au moins un copolymère éthylène-propylène (EPM) ou un terpolymère éthylène-propylène-diène (EPDM), et un article en caoutchouc, tel qu'un tuyau ou un joint d'étanchéité, incorporant cette composition. L'invention s'applique notamment à un tuyau monocouche ou multicouche pour véhiculer un fluide sous pression, le fluide pouvant être un liquide, un gaz, un mélange de gaz ou un fluide supercritique. L'invention s'applique en particulier à un tel tuyau pour un circuit d'air humidifié, d'eau ultrapure ou de liquide de refroidissement équipant une pile à combustible (e.g. une « PEMFC » à membrane échangeuse de protons, telle qu'une pile à hydrogène), par exemple pour un véhicule électrique automobile « FCEV » (pour véhicule électrique à pile à combustible pouvant être de type tourisme, poids-lourd, agricole ou génie civil), ferroviaire, aquatique, aérien ou spatial, ou à un tel tuyau pour une installation industrielle.

### Technique antérieure

De manière connue, un tuyau pour circuit de refroidissement d'un moteur thermique de véhicule automobile peut être monocouche ou multicouche en fonction de la pression du fluide véhiculé, pouvant être dans le cas multicouche renforcé par une armature par exemple textile (qui surmonte une couche interne en caoutchouc et qui est surmontée par une couche externe en caoutchouc exposée à l'air environnant le tuyau). Le caoutchouc du tuyau au contact duquel circule le liquide de refroidissement (usuellement de l'eau glycolée) est généralement à base d'au moins un terpolymère éthylène-propylène-diène (EPDM), en raison de l'affinité physicochimique réduite des EPDM avec le mélange eau-éthylène glycol qui permet d'éviter le gonflement du caoutchouc et de lui conférer une imperméabilité satisfaisante à ce liquide de refroidissement.

Les tuyaux en caoutchouc utilisés dans un circuit de refroidissement équipant une pile à hydrogène d'un véhicule électrique automobile « FCEV » transfèrent également un liquide de refroidissement de type eau glycolée, avec par conséquent la même double nécessité, pour la couche unique ou interne du tuyau, de présenter une résistance au gonflement et une imperméabilité satisfaisantes au contact de ce liquide. Cependant, les compositions de caoutchouc de la couche unique ou interne de tuyaux pour les circuits de refroidissement, d'eau ultrapure et d'air humidifié reliés à une pile à hydrogène, doivent en outre satisfaire à d'autres exigences cumulatives, parmi lesquelles celles exposées ci-après.

Une première exigence à remplir par ces compositions est qu'elles doivent générer un relargage minimisé d'ions vers le fluide aqueux en circulation, dont la conductivité ionique initiale réduite doit rester basse (même après un contact prolongé avec ce fluide), afin d'éviter des courts-circuits. Or, un inconvénient des compositions usuelles à base d'un EPDM est qu'elles sont souvent susceptibles de relarguer dans le fluide une quantité élevée d'ions métalliques provenant de certains des additifs utilisés en plus de l'EPDM.

Une deuxième exigence à remplir par ces compositions est qu'elles doivent en outre participer à l'isolation électrique de la pile à hydrogène, les matériaux utilisés devant donc être fortement résistifs en présentant une résistivité électrique volumique maximisée, idéalement égale ou supérieure à 1,0.10⁸ Ohm.cm. Or, un inconvénient des compositions usuelles à base d'un EPDM est qu'elles présentent des résistivités volumiques parfois insuffisantes, se situant dans une zone intermédiaire dite de « percolation », i.e. entre 10⁴ et 10⁸ Ohm.cm.

Le document EP 1 291 566 B1 présente une composition de caoutchouc pour un tuyau équipant en particulier une pile à combustible, la composition étant présentée comme générant une contamination minimisée pour le fluide transporté et une résistivité volumique maximisée. La composition comprend (A) au moins un caoutchouc choisi parmi un EPM, un EPDM et un caoutchouc silicone, (B) 1-10 pce d'un peroxyde comme seul agent de réticulation et (C) 20-130 pce d'une charge de structure cristalline laminaire, avec pce désignant des parties en poids pour 100 parties de (A). La composition de l'exemple 7 comprend (fractions massiques) 29,48 % d'un EPDM, 1,24 % d'un système de réticulation au peroxyde, 29,48 % d'un noir de carbone « Asahi No. 52 », 22,11 % de kaolinite et 17,69 % d'un plastifiant paraffinique, pour une résistivité volumique de la composition mesurée à 2.10¹¹ Ohm.cm et une conductivité électrique de l'eau pure de 14,4 µS/cm après 168 heures de traitement thermique appliqué à une feuille de 50 g de la composition de caoutchouc, immergée dans 250 mL d'eau pure à 100° C.

Un inconvénient des compositions présentées dans EP 1 291 566 B1 est qu'elles ne comprennent pas le moindre additif d'aide à leur mise en oeuvre, ce qui pénalise leur aptitude à être extrudées, notamment, et ne les rend ainsi pas utilisables pour constituer des tuyaux dans des conditions satisfaisantes.

Un autre inconvénient des compositions présentées dans EP 1 291 566 B1 est que les mesures de conductivité électrique décrites dans ce document relativement ancien ne satisfont pas aux conditions retenues ces dernières années pour assurer la fiabilité de mesures de conductivité après vieillissement. En effet, ce document ne divulgue pas les dimensions des échantillons testés (la longueur, la largeur et l'épaisseur des feuilles de caoutchouc sont inconnues), ce qui ne permet pas de connaître le ratio surface de caoutchouc exposée / volume d'eau, déterminant dans un essai de vieillissement d'un échantillon au contact d'un fluide.

### Exposé de l'invention

Un but de la présente invention est de proposer une composition de caoutchouc en particulier utilisable dans un tuyau véhiculant de d'air humidifié, un liquide aqueux de refroidissement ou de l'eau ultrapure en liaison avec une pile à combustible, qui remédie notamment aux inconvénients précités, tout en présentant une aptitude à la mise en oeuvre à l'état réticulable satisfaisante et des propriétés à l'état réticulé également satisfaisantes, incluant un relargage d'ions minimisé en milieu aqueux et une résistivité électrique maximisée.

Ce but est atteint en ce que la Demanderesse vient de découvrir d'une manière inattendue au vu de l'art antérieur précité que si l'on utilise, dans une composition de caoutchouc à base d'un EPM ou EPDM réticulable au peroxyde, des fractions massiques spécifiques d'un noir de carbone de type semi-renforçant, d'une charge inorganique lamellaire, d'un système d'aide à la mise en oeuvre incluant un agent de recouvrement dudit noir de carbone et d'un système plastifiant, alors on peut obtenir la couche unique d'un tuyau monocouche ou au moins une couche interne d'un tuyau multicouche présentant une aptitude à la mise en œuvre satisfaisante à l'état réticulable et des propriétés physicochimiques et mécaniques également satisfaisantes à l'état réticulé, avec notamment une minimisation du relargage d'ions par la composition de caoutchouc vers le fluide véhiculé à son contact tout en conférant à cette composition une résistivité volumique suffisamment élevée, rendant ainsi cette composition particulièrement bien adaptée pour constituer un tuyau monocouche ou au moins une couche interne d'un tuyau multicouche véhiculant de l'air humidifié, un liquide aqueux de refroidissement ou de l'eau ultrapure, en liaison avec une pile à combustible.

Une composition de caoutchouc selon l'invention est à base d'au moins un élastomère choisi parmi les copolymères éthylène-propylène (EPM) et les terpolymères éthylène-propylène-diène (EPDM), et la composition comprend :
- une charge comprenant un noir de carbone et une charge inorganique lamellaire,
- un système d'aide à la mise en œuvre,
- un système plastifiant, et
- un système de réticulation comprenant un peroxyde,
et, selon l'invention, la composition comprend (en fractions massiques) :
28-32 % du noir de carbone, lequel est choisi parmi
les noirs de carbone de série ASTM N600 ou N700, et
les noirs de carbone présentant une surface spécifique BET de 15-25 m²/g, un indice d'adsorption d'iode de 16-24 mg/g selon la norme ASTM D1510, et un indice d'absorption de dibutylphtalate (DBP) de 90-110 mL/100 g selon la norme ASTM 2414-90,
10-20 % de la charge inorganique lamellaire,
1,0-6,0 % du système d'aide à la mise en œuvre, lequel comprend un agent de recouvrement du noir de carbone apte à se lier à des groupes fonctionnels acides dudit noir de carbone, et
10-22 % du système plastifiant.

On notera que ce système d'aide à la mise en œuvre ainsi défini contribue à optimiser :
- l'aptitude à la mise en œuvre de la composition en combinaison avec ce système plastifiant, et
- la réticulation de la composition, en recouvrant les fonctions acides dudit noir de carbone de sorte à minimiser l'absorption du peroxyde par ce noir de carbone.

On notera également que la charge mixte selon l'invention, comprenant les quantités précitées du noir de carbone et de la charge inorganique lamellaire, contribue d'une manière significative à l'obtention conjointe d'un relargage minimisé d'espèces ioniques par la composition dans le fluide aqueux à son contact, et d'une résistivité volumique au contraire très élevée pour ladite composition.

Par l'expression « à base de », on entend dans la présente description que la composition ou l'ingrédient considéré comprend majoritairement en poids le constituant concerné, i.e. selon une fraction massique supérieure à 50 %, de préférence supérieure à 75 % et pouvant aller jusqu'à 100 %.

A titre d'élastomère(s) utilisable dans une composition selon l'invention, l'on utilise avantageusement un ou des EPDM, le ou chaque EPDM étant modifié ou non, de préférence non étendu à l'huile et présentant :
- des taux massiques d'unités issues de l'éthylène de 47-71 %, d'un diène non conjugué (tel que l'éthylidène norbornène : ENB) de 3-7%, et de préférence
- une viscosité Mooney ML(1+4) à 125° C comprise entre 65 et 90.

De préférence, ledit au moins un EPDM, non étendu à l'huile, présente :
- des taux massiques d'unités issues de l'éthylène de 50-68 %, d'un diène non conjugué (tel que l'ENB) de 4,0-6,0 %, et de préférence
- une viscosité Mooney ML(1+4) à 125° C comprise entre 70 et 85.
On peut par exemple utiliser un coupage de deux EPDM non étendus à l'huile, dont l'un présente un taux massique d'unités issues de l'éthylène de 47-53 % et une viscosité Mooney ML(1+4) à 125° C comprise entre 65 et 75, et dont l'autre présente un taux massique d'unités issues de l'éthylène de 65-71 % et une viscosité Mooney ML(1+4) à 125° C comprise entre 80 et 90.

Également à titre préférentiel, la composition comprend ledit au moins un élastomère EPDM selon une fraction massique de 25-40 % (e.g. de 30-35 %), comprenant de préférence un mélange d'un premier EPDM et d'un second EPDM à taux massiques d'unités issues de l'éthylène de 48-52 % et de 66-70 %, respectivement, avec e.g. les fractions massiques respectives du premier EPDM et du second EPDM dans le mélange qui sont de 40-60 % et de 60-40 %.

On notera que ces compositions selon l'invention à base d'au moins un EPM ou EPDM présentent ainsi une résistivité élevée notamment grâce à ladite charge inorganique lamellaire, en dépit de l'utilisation d'une quantité élevée de noir de carbone qui est connue pour pénaliser cette résistivité (en augmentant la conductivité électrique). Cette résistivité élevée permet en particulier de minimiser la dégradation électrochimique de la couche interne du tuyau au contact du fluide qu'il véhicule, lorsque ce fluide est un liquide de refroidissement par exemple de type eau glycolée, sans pénaliser la résistance du tuyau à son environnement extérieur.

Par « charge », on entend dans la présente description plusieurs charges individuelles de grades renforçants ou non pour l'élastomère concerné, qui sont dispersées de manière homogène dans la composition et par « charge inorganique lamellaire », on entend une charge minérale (parfois appelée « charge blanche » ou « charge claire ») présentant une structure à lamelles, par opposition aux charges organiques telles que les noirs de carbone et aux charges inorganiques non lamellaires telles que les silices.

De préférence, ledit noir de carbone (i.e. de série ASTM N600 ou N700, ou bien présentant une surface BET de 15-25 m²/g, un indice d'adsorption d'iode de 16-24 mg/g et un indice d'absorption de DBP de 90-110 mL/100 g), est présent dans la composition selon une fraction massique de 28,5-31,5 %, voire de 29,0-31,0 %.

A titre encore plus préférentiel, le noir de carbone selon l'invention appartient à la série ASTM N600 (et peut alors correspondre ou être similaire aux noirs de grade ASTM N650 ou N660), ou bien il présente une surface spécifique BET de 17-23 m²/g, un indice d'adsorption d'iode de 18-22 mg/g selon ASTM D1510, et un indice d'absorption de DBP de 95-105 mL/100 g selon ASTM 2414-90.

Par « charge inorganique lamellaire », on entend ici une charge inorganique qui présente un facteur de forme supérieur à 10, de préférence supérieur à 20, étant précisé que par « facteur de forme » (« aspect ratio » en anglais), on entend de manière connue le ratio de la dimension moyenne la plus grande (usuellement largeur ou longueur) sur la dimension moyenne la plus petite (usuellement épaisseur) caractérisant des lamelles de la charge inorganique. Ce ratio moyen peut être mesuré par microscopie électronique à balayage (MEB).

Avantageusement, la charge inorganique lamellaire peut être choisie parmi les phyllosilicates et les talcs.

Par « phyllosilicate », on entend de manière connue un sous-groupe du groupe des silicates, les phyllosilicates étant construits par empilement de couches tétraédriques (« T ») où les tétraèdres partagent trois sommets sur quatre (les oxygènes « basaux »), le quatrième sommet (l'oxygène « apical ») étant reliée à une couche octaédrique (« O ») occupée par des cations différents. A titre de phyllosilicates, conviennent par exemple les smectites, la kaolinite et les kaolins, les micas, les vermiculites et les montmorillonites.

De manière connue, on entend :
- par « kaolinite », une espèce minérale de phyllosilicate composée de silicate d'aluminium hydraté, de formule Al₂Si₂O₅(OH)₄ :
- par « mica », un groupe minéral à l'intérieur des phyllosilicates principalement à base de silicate d'aluminium et de potassium ; et
- par « talc », une espèce minérale essentiellement composée de silicate de magnésium doublement hydroxylé de formule Mg₃Si₄O₁₀(OH)₂.

De préférence, la charge inorganique lamellaire de la composition selon l'invention comprend un kaolin, un mica ou un talc qui est présent dans la composition selon une fraction massique de 12-18 %, plus préférentiellement de 13-17 % et par exemple de 14-16 %.

A titre encore plus préférentiel, la charge inorganique lamellaire comprend un kaolin par exemple calciné, selon une fraction massique dans la composition de 12-18%, par exemple de 13-17 %, voire de 14-16 %. Le kaolin, calciné de préférence à plus de 600° C, peut notamment présenter des fractions massiques de SiO₂, Al₂O₃ et Fe₂O₃ respectivement de 50-65 %, 30-45 % et 0,5-1,5 %, et une taille moyenne de grains d50 de 1-2 µm.

Selon un mode de réalisation préférentiel de l'invention, la charge de la composition selon l'invention comprend en combinaison :
- un noir de carbone de série N600, ou bien présentant une surface spécifique BET de 17-23 m²/g, un indice d'adsorption d'iode de 18-22 mg/g et un indice d'absorption de DBP de 95-105 mL/100 g, et
- un kaolin, un mica ou un talc (de préférence un kaolin, par exemple calciné comme décrit ci-dessus) à titre de charge inorganique lamellaire.

Selon une autre caractéristique de l'invention, la charge de ladite composition peut être avantageusement dépourvue
- de charge inorganique non lamellaire, étant alors dépourvue de silice et de carbonate de calcium, en particulier, et
- de charge inorganique lamellaire pourvue de groupes silanes.

A titre d'agent de recouvrement apte à se lier à des groupes fonctionnels acides du noir de carbone (de série N600 ou N700 ou bien présentant une surface spécifique BET de 15-25 m²/g, un indice d'adsorption d'iode de 16-24 mg/g et un indice d'absorption de DBP de 90-110 mL/100 g), on peut citer un polyéthylène glycol présentant de préférence une masse moléculaire Mn moyenne en nombre inclusivement comprise entre 3000 et 5000 g/mol, par exemple de 3500-4500 g/mol.

Selon une autre caractéristique de l'invention, ledit système d'aide à la mise en œuvre peut comprendre en outre au moins un agent lubrifiant par exemple choisi parmi des composés à base d'esters d'acides gras et par exemple des esters d'acides gras aliphatiques ayant de 14 à 22 atomes de carbone.

On notera que ledit agent lubrifiant peut avantageusement exercer une fonction de lubrifiant externe pour la composition de caoutchouc, assurant de ce fait une lubrification externe de l'interface avec l'appareillage de mise en œuvre (e.g. une adhésion réduite avec les surfaces métalliques au contact desquelles se trouve la composition lors de sa mise en œuvre, incluant la surface de l'extrudeuse).

De préférence, la composition selon l'invention comprend le système d'aide à la mise en œuvre selon une fraction massique de 1,5-4,0 %, lequel système d'aide à la mise en œuvre peut alors comprendre ledit au moins un agent lubrifiant en plus dudit agent de recouvrement.

Plus préférentiellement, le système d'aide à la mise en œuvre est constitué dudit au moins un agent lubrifiant et dudit agent de recouvrement, et peut être alors présent dans la composition selon une fraction massique de 2,0-3,5 %.

D'une manière générale, le système d'aide à la mise en œuvre peut être dépourvu de tout agent d'activation du système de réticulation (la composition étant alors avantageusement dépourvue d'oxyde de zinc et d'acide stéarique).

A titre de système plastifiant utilisable selon l'invention, on peut utiliser une huile plastifiante et/ou une résine plastifiante, étant précisé que le système plastifiant est de préférence présent dans la composition selon une fraction massique de 12-20 % (plus préférentiellement de 14-18 %), et peut avantageusement comprendre une huile de haute viscosité (de viscosité cinématique à 100° C, mesurée selon la norme ASTM D 445, d'au moins 30 mm²/s).

On peut utiliser en variante de cette huile de haute viscosité au moins une huile choisie parmi les huiles minérales (e.g. paraffiniques, naphténiques et/ou aromatiques), les huiles issues de la biomasse (incluant les huiles végétales modifiées ou non), et leurs mélanges.

On notera que le système d'aide à la mise en œuvre tel que défini ci-dessus, conjointement à la charge et au système plastifiant précités, permet de conférer à la composition réticulable selon l'invention une viscosité Mooney ML(1+4) à 100° C réduite tout en s'opposant à sa réticulation prématurée (grillage), rendant ainsi la composition de l'invention apte à être mise en œuvre par extrusion, du fait d'un aspect visuel satisfaisant avec une absence de trous, de craquelures et de retrait de l'extrudât.

Selon une autre caractéristique de l'invention, la composition peut comprendre le système de réticulation selon une fraction massique de 2,5-4,0 % (de préférence de 3,0-3,5 %), lequel comprend un peroxyde organique et un co-agent de réticulation, e.g. le triallyl cyanurate (TAC) ou le triallyl isocyanurate (TAIC).

On notera que ce co-agent permet d'améliorer de manière significative la réticulation par le peroxyde et donc les propriétés mécaniques et physiques de la composition, en comparaison d'une composition témoin réticulée sans co-agent ajouté au même peroxyde organique.

Une composition selon l'invention peut comprendre en outre un système antioxydant comprenant au moins un antioxydant, de préférence aromatique hétérocyclique (e.g. à base de 2,2,4-triméthyl-1,2-dihydroquinoline polymérisée).

Selon une autre caractéristique de l'invention, la composition peut avantageusement présenter à l'état réticulé une résistivité volumique, mesurée selon la norme IEC 62631 3, qui est égale ou supérieure à 1,0.10⁸ Ohm.cm, de préférence égale ou supérieure à 1,0.10⁹ Ohm.cm.

On notera que cette résistivité volumique très élevée de la composition de caoutchouc selon l'invention permet de contribuer efficacement à l'isolation électrique de la pile à combustible, dont l'un au moins des circuits d'air humidifié, d'eau et de refroidissement est équipé d'un tuyau incorporant cette composition.

Selon une autre caractéristique de l'invention pouvant être combinée à la précédente, après vieillissement par immersion d'échantillons constitués de la composition réticulée dans un volume d'un liquide aqueux choisi parmi l'eau ultrapure et les mélanges eau-éthylène glycol, pendant 2 à 4 semaines à 80° C, avec un ratio surface de la plaque / volume du liquide aqueux imposé à 30 mm²/mL et les échantillons découpés avec un emporte-pièce de dimensions 40 x 60 mm dans une plaque d'épaisseur 2,0 ± 0,2 mm, le liquide aqueux peut avantageusement présenter une conductivité ionique finale Cf inférieure ou égale à sa conductivité ionique initiale Ci (avant ladite immersion) augmentée de 10 µS/cm :
Cf - Ci ≤ 10 µS/cm, et de préférence Cf - Ci ≤ 8 µS/cm lorsque le liquide aqueux est de l'eau ultrapure.

On notera que cette différence de conductivité ionique minime pour le liquide aqueux avant et après ledit vieillissement réalisé selon ce protocole bien défini et reproductible, témoigne d'une minimisation du relargage d'ions par la composition de caoutchouc vers le liquide aqueux véhiculé à son contact, ce qui contribue à éviter les courts-circuits dans l'installation de pile à combustible.

Selon un autre aspect général de l'invention, un article en caoutchouc selon l'invention est choisi parmi les tuyaux de transfert sous pression d'un fluide liquide, gazeux ou supercritique et les joints d'étanchéité, l'article comprenant ou étant constitué d'une composition de caoutchouc extrudée à l'état réticulable puis réticulée, telle que définie par l'une quelconque des caractéristiques ci-dessus.

De préférence, l'article est un tuyau pour un circuit relié à une pile à combustible véhiculant de l'air humidifié, un liquide de refroidissement eau-éthylène glycol ou de l'eau ultrapure, et le tuyau est alors :
- monocouche, étant constitué de ladite composition de caoutchouc, ou
- multicouche, comprenant une couche radialement interne constituée de ladite composition de caoutchouc, au moins une couche de renforcement la surmontant, et une couche de couverture radialement externe.

A titre encore plus préférentiel, le tuyau est configuré pour véhiculer de l'eau ultrapure ou un liquide de refroidissement eau-éthylène glycol, et il est tel que :
- la composition de caoutchouc présente à l'état réticulé une résistivité volumique, mesurée selon la norme IEC 62631 3, qui est égale ou supérieure à 1,0.10⁸ Ohm.cm, de préférence égale ou supérieure à 1,0.10⁹ Ohm.cm, et
- après vieillissement par immersion d'échantillons constitués de la composition de caoutchouc réticulée dans un volume d'un liquide aqueux choisi parmi l'eau ultrapure et les mélanges eau-éthylène glycol, pendant 2 à 4 semaines à 80° C, avec un ratio surface de chaque échantillon / volume de liquide aqueux imposé à 30 mm²/mL et les échantillons découpés avec un emporte-pièce de dimension 40 x 60 mm dans une plaque d'épaisseur 2,0 ± 0,2 mm, ledit liquide aqueux présente une conductivité ionique finale Cf inférieure ou égale à sa conductivité ionique initiale Ci (avant ladite immersion) augmentée de 10 µS/cm :
   Cf - Ci ≤ 10 µS/cm, et de préférence Cf - Ci ≤ 8 µS/cm lorsque le liquide aqueux est de l'eau ultrapure.

Selon encore un autre aspect général de l'invention, ladite composition de caoutchouc réticulable peut être préparée en mettant en œuvre un procédé comprenant essentiellement les étapes successives suivantes :
a) introduction des ingrédients de la composition, à l'exception du système de réticulation, dans un mélangeur interne ;
b) travail thermomécanique en une étape dans ce mélangeur interne, jusqu'à atteindre une température maximale de "tombée" par exemple de120-130° C ;
c) récupération puis refroidissement du mélange ainsi obtenu ; puis
d) ajout du système de réticulation au peroxyde dans un mélangeur externe (e.g. à cylindres) à une température de 95-105° C, avec travail mécanique dans ce mélangeur externe de la composition réticulable ainsi obtenue.

En variante, le système de réticulation peut être introduit lors de l'étape b), ou bien lors d'une deuxième introduction dans le mélangeur interne suite au refroidissement du mélange précurseur résultant de la première étape.

### Brève description des dessins

D'autres caractéristiques, avantages et détails de l'invention ressortiront à la lecture de la description suivante d'exemples de réalisation de l'invention, donnés à titre illustratif en relation avec les dessins joints, parmi lesquels :
**Fig. 1**

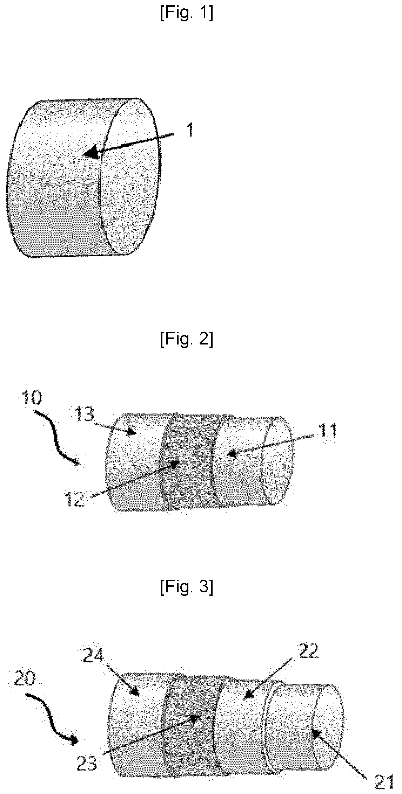

   [fig. 1] est une vue schématique latérale et en perspective d'un tuyau monocouche selon l'invention.
**Fig. 2**
   [fig. 2] est une vue schématique latérale et en perspective avec arrachements partiels d'un tuyau multicouche selon un exemple de l'invention.
**Fig. 3**
   [fig. 3] est une vue schématique latérale et en perspective avec arrachements partiels d'un tuyau multicouche selon un autre exemple de l'invention.
**Fig. 4**

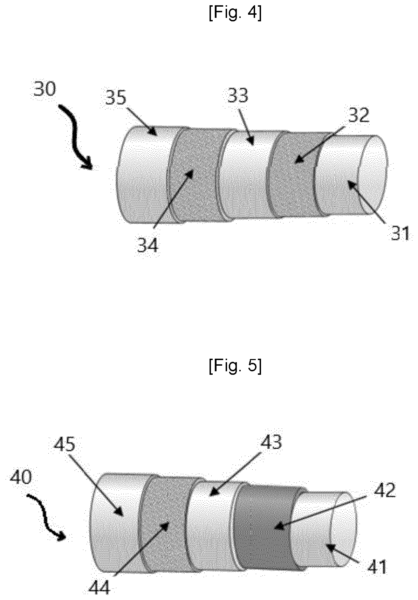

   [fig. 4] est une vue schématique latérale et en perspective avec arrachements partiels d'un tuyau multicouche selon un autre exemple de l'invention.
**Fig. 5**
   [fig. 5] est une vue schématique latérale et en perspective avec arrachements partiels d'un tuyau multicouche selon un autre exemple de l'invention.
**Fig. 6**

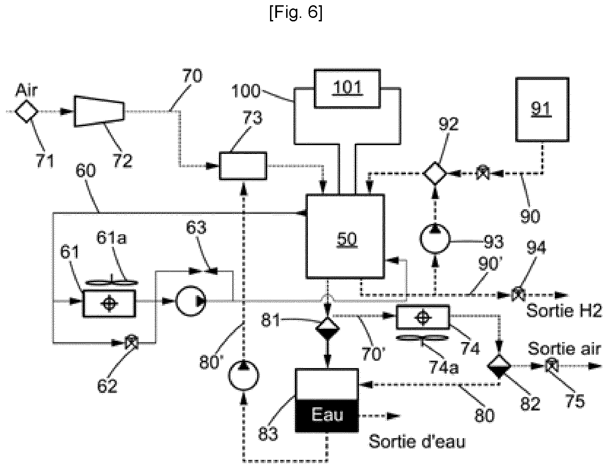

   [fig. 6] est une vue schématique d'une installation de pile à combustible dont l'un au moins des circuits d'air humidifié, de refroidissement et d'eau qui y sont reliés comprend un tuyau monocouche ou multicouche selon l'invention.

### Exemples de réalisation de l'invention

Le tuyau 1 monocouche de la figure 1 est par exemple apte à véhiculer un fluide à une pression d'au plus 3. 10⁵ Pa et une température d'au plus 120° C, et il peut être assemblé à deux connecteurs par exemple thermoplastiques. Ce tuyau 1 est constitué d'une composition selon l'invention telle que définie ci-dessus.

Le tuyau multicouche 10 de la figure 2 est par exemple apte à véhiculer un fluide à une pression pouvant être égale ou supérieure à 3. 10⁵ Pa, et il comprend un tube radialement interne 11, une couche de renforcement 12 et une couche de couverture radialement externe 13, étant précisé qu'au moins le tube 11 est constitué d'une composition selon l'invention telle que définie ci-dessus.

La couche de renforcement 12 peut comprendre, à titre non limitatif, un tricot, tresse ou guipe à base de fils multifilamentaires réalisés en un ou plusieurs matériau(x) textile(s), par exemple en un polyamide (e.g. en aramide), polyester (e.g. en PET) ou en rayonne (le terme « fil » désignant de manière usuelle aussi bien un filé à base d'une multitude de filaments élémentaires de faible diamètre qui sont tordus ensemble, qu'un retors obtenu par torsion de plusieurs filés).

Le tuyau multicouche 20 de la figure 3 se distingue de celui de la figure 2, en ce que le tube interne 21 est surmonté d'une couche intermédiaire 22 elle-même surmontée d'une couche de renforcement 23 recouverte d'une couche de couverture 24, étant précisé qu'au moins le tube 21 est constitué d'une composition selon l'invention.

Le tuyau multicouche 30 de la figure 4 se distingue de celui de la figure 3, en ce que le tube interne 31 est surmonté d'une couche de renforcement interne 32 elle-même surmontée d'une couche intermédiaire 33 recouverte d'une couche de renforcement externe 34 puis d'une couche de couverture 35, étant précisé qu'au moins le tube 31 est constitué d'une composition selon l'invention.

Le tuyau multicouche 40 de la figure 5 se distingue de celui de la figure 3, en ce que le tube interne 41 est surmonté d'une couche barrière 42 en matière plastique formant un entrepli, puis d'une couche intermédiaire 43 recouverte d'une couche de renforcement 44, elle-même surmontée d'une couche de couverture 45, avec au moins le tube 41 qui est constitué d'une composition selon l'invention.

On notera qu'un tuyau multicouche selon l'invention pourrait comprendre un arrangement de couches différant de ceux illustrés aux figures 2-5, tant par le nombre de ses couches que par leurs fonctions respectives.

L'installation de pile à combustible illustrée à la figure 6 à titre non limitatif comprend essentiellement, autour et en liaison avec une pile à combustible 50, telle qu'une pile à hydrogène par exemple de type « PEMFC » :
- une boucle fermée de refroidissement 60 véhiculant un liquide de refroidissement comprenant par exemple un mélange eau-éthylène glycol, qui comprend notamment un condenseur 61 équipé d'un ventilateur 61a, une vanne de régulation 62 et une vanne anti-retour 63 ;
- une boucle d'air 70, 70' véhiculant de l'air qui comprend, en aval d'un filtre 71 et d'un compresseur 72, un humidificateur 73 amenant (portion 70) l'air humidifié dans la pile 50, et l'extrayant de cette dernière (portion 70') jusqu'à des séparateurs air/eau 81 et 82 respectivement situés en amont et en aval d'un condenseur 74 équipé d'un ventilateur 74a recevant la sortie d'air du séparateur amont air/eau 81, la sortie d'air du séparateur aval air/eau 82 conduisant à une sortie d'air de l'installation via une vanne de régulation 75 ;
- une boucle d'eau 80, 80' s'étendant (portion 80) à partir des sorties d'eau respectives des séparateurs amont 81 et aval 82 jusqu'à un réservoir d'eau 83, pourvu de la sortie d'eau de l'installation et d'une ligne 80' d'alimentation de l'humidificateur 73 en eau ;
- une boucle d'hydrogène 90, 90' comprenant une portion 90 s'étendant à partir d'un réservoir d'hydrogène 91 jusqu'à la pile 50 via un filtre 92, avec une recirculation 93 de l'hydrogène quittant la pile 50 vers le filtre 92 et vers une portion 90' de sortie d'hydrogène de l'installation via une vanne de régulation 94 ; et
- un circuit électrique 100 comportant une unité de puissance 101 reliée à la pile 50.

On notera que des tuyaux selon l'invention pourraient être incorporés à l'un au moins des circuits de refroidissement, d'air et d'eau équipant une pile à combustible, mais avec le ou chaque circuit incorporant ces tuyaux qui pourrait présenter des caractéristiques différentes de celles de la figure 6.

### Préparation d'une composition de caoutchouc I1 selon l'invention et de compositions « témoin » C1, C2 et C3 non conformes à l'invention :

On a préparé chacune des compositions de caoutchouc I1 et C1-C3 essentiellement en mettant en oeuvre le procédé suivant.

On a introduit les ingrédients de chaque composition, à l'exception du système de réticulation, dans un mélangeur interne de type Banbury^{®}. On a alors conduit un travail thermomécanique en une étape (durée du malaxage : 30 s à 2 min.), jusqu'à atteindre une température maximale de "tombée" d'environ 125° C. On a récupéré le mélange ainsi obtenu, on l'a refroidi, puis on a ajouté le système de réticulation dans un mélangeur externe à cylindres à 100° C, en mélangeant le tout pendant environ 2 min. dans une étape de travail mécanique.

On a façonné chaque composition de caoutchouc réticulable ainsi obtenue sous forme d'éprouvettes cylindriques pour procéder aux mesures de propriétés à l'état non réticulé (viscosité Mooney ML(1+4) à 100° C suivant ISO 289-1, et temps de grillage t5 sans réticulation prématurée à 135° C selon ISO 289-2), et sous forme d'éprouvettes de type haltères pour les mesures des propriétés physiques et mécaniques à l'état réticulé après cuisson des éprouvettes à 180° C.

On a notamment mesuré sur les éprouvettes de type haltères respectivement constituées des compositions réticulées I1 et C1-C3 :
- la dureté en points DIDC (Degrés Internationaux de Dureté du Caoutchouc), selon la norme ISO 48 :2010,
- la contrainte à la rupture Cr et l'allongement à la rupture Ar, en traction uni-axiale selon la norme ISO 37:2017, et
- la résistivité électrique volumique à 1000 V selon la norme IEC 62631 3.

On a par ailleurs procédé à des mesures de conductivité ionique d'eau ultrapure (de conductivité ionique initiale Ci inférieure à 1,0 µS/cm), après vieillissement par immersion d'échantillons constitués de chaque composition réticulée I1 et C1-C3 dans un volume de cette eau ultrapure, pendant 2 à 4 semaines à 80° C, avec un ratio surface de la plaque / volume de liquide aqueux imposé à 30 mm²/mL (le volume d'eau étant ajusté dans les flacons pour conserver ce ratio) et les échantillons qui ont été découpés avec un emporte-pièce de dimensions 40 × 60 mm dans une plaque d'épaisseur 2,0 ± 0,2 mm, en mesurant la différence ΔC = Cf - Ci entre la conductivité ionique finale Cf et la conductivité ionique initiale Ci de l'eau ultrapure, respectivement après et avant ladite immersion.

On a notamment utilisé à cet effet un conductimètre « Mettler Toledo - Five Easy F30 » avec une cellule de conductivité « Mettler Toledo - INLAB 720 » (gamme de mesure de 0,01-500 µS/cm, après calibration initiale du conductimètre), et des flacons de 250 mL munis de bouchons GL45 (les flacons étant à chaque fois rincés à l'eau ultrapure et séchés avec du papier Joseph). Pour chaque essai, on a utilisé trois échantillons issus d'une même plaque et dont l'épaisseur a été mesurée par une méthode à 5 points (conduisant à une épaisseur moyenne considérée).

On a rempli chaque flacon avec 175 mL d'eau ultrapure, pour obtenir le ratio surface de plaque / volume d'eau égal à 30 mm²/mL, puis on a réalisé une première mesure de conductivité Ci sur l'eau seule dans chaque flacon. On a ensuite introduit la première plaque de chaque composition réticulée (préalablement rincée) dans un premier flacon, que l'on a rebouché puis agité quelques secondes. On a alors procédé à la première mesure de conductivité immédiatement après l'immersion, puis on a inséré un deuxième échantillon de la même composition réticulée dans un autre flacon, et ainsi de suite pour toutes les compositions I1 et C1-C3 testées.

On a réalisé le vieillissement précité pendant 2 à 4 semaines, avec une mise en étuve à 80° C des flacons contenant les échantillons immergés testés faisant suite à chaque mesure de conductivité finale Cf, étant précisé qu'avant chaque mesure consécutive au vieillissement, l'on a extrait chaque flacon de l'étuve pour le placer pendant 4 heures à 23° C dans une enceinte de refroidissement.

Le tableau 1 suivant détaille les formulations respectives des compositions I1 et C1-C3 (en pce : parties en poids pour 100 parties d'élastomères EPDM),

**[Tableau 1]**

| | **I1** | **C1** | **C2** | **C3** |
|---|---|---|---|---|
| EPDM 1 * | 50 | 30 | 50 | 30 |
| EPDM 2 * | 50 | 70 | 50 | 70 |
| Noir de carbone série ASTM N600 * | 95 | 110 | 75 | 75 |
| Kaolin calciné * | 45 | 29 | 50 | 50 |
| Huile plastifiante * | 50 | 54 | 35 | 35 |
| Agent de recouvrement : PEG 4000 | 2,8 | 2,8 | 2,8 | 2,8 |
| Agent lubrifiant * | 4,6 | 4,6 | 4,6 | 4,6 |
| Antioxydant quinoléine | 1,2 | 1,2 | 1,2 | 1,2 |
| Co-agent TAC | 0,7 | 0,7 | 0,7 | 0,7 |
| Bis-peroxyde organique | 9,4 | 9,4 | 9,4 | 9,4 |
| TOTAL (parties en poids) | 308,7 | 311,7 | 278,7 | 278,7 |

Les ingrédients identifiés au tableau 1 par le signe * présentaient les caractéristiques suivantes :
- EPDM 1 : taux massiques d'unités issues de l'éthylène de 50 %, d'unités issues d'éthylidène norbornène de 5,0 %, et viscosité Mooney ML(1+4) à 125° C de 70.
- EPDM 2 : taux massiques d'unités issues de l'éthylène de 68 %, d'unités issues d'éthylidène norbornène de 4,9 %, et viscosité Mooney ML(1+4) à 125° C de 85.
- Noir de carbone de surface spécifique BET selon ASTM D 6556 d'environ 20 m²/g, d'indice d'adsorption d'iode selon ASTM D 1510 d'environ 20 mg/g, et d'indice d'absorption de DBP selon ASTM 2414-90 d'environ 100 mL/100 g.
- Kaolin calciné comprenant des fractions massiques de SiO₂, Al₂O₃, et Fe₂O₃ respectives de 55-60 %, 35-40 % et 0,5-1,0 %, et une taille moyenne d50 de grains comprise entre 1,0 et 1,5 µm.
- Huile plastifiante : huile de viscosité cinématique à 100° C, mesurée selon la norme ASTM D 445 comprise entre 30 et 40 mm²/s.
- Agent lubrifiant : mélange d'esters d'acides gras aliphatiques.

Le tableau 2 ci-après donne les fractions massiques (en %) des ingrédients du tableau 1 dans chaque composition I1 et C1-C3.

**[Tableau 2]**

| | **I1** | **C1** | **C2** | **C3** |
|---|---|---|---|---|
| EPDM 1 * | 16,20 | 9,62 | 17,94 | 10,76 |
| EPDM 2 * | 16,20 | 22,46 | 17,94 | 25,12 |
| Noir de carbone série ASTM N600 * | 30,77 | 35,29 | 26,91 | 26,91 |
| Kaolin calciné * | 14,58 | 9,30 | 17,94 | 17,94 |
| Huile plastifiante * | 16,20 | 17,32 | 12,56 | 12,56 |
| Agent de recouvrement : PEG 4000 | 0,91 | 0,90 | 1,00 | 1,00 |
| Agent lubrifiant * | 1,49 | 1,48 | 1,65 | 1,65 |
| Antioxydant quinoléine | 0,39 | 0,38 | 0,43 | 0,43 |
| Co-agent TAC | 0,22 | 0,23 | 0,25 | 0,25 |
| Bis-peroxyde organique | 3,04 | 3,02 | 3,38 | 3,38 |
| TOTAL (%) | 100,00 | 100,00 | 100,00 | 100,00 |

Le tableau 3 ci-après présente les propriétés rhéologiques essentielles des compositions obtenues I1 et C1-C3, comprenant pour chacune d'entre elles :
- la viscosité Mooney ML(1+4) à 100° C, mesurée selon ISO 289-1 ;
- le temps de grillage initial t5 sans réticulation prématurée, selon ISO 289-2 ; et
- l'aptitude à l'extrusion sous forme de tuyau (« extrudabilité », incluant le comportement et l'aspect de l'extrudât constitué de la composition réticulable).

**[Tableau 3]**

| | **I1** | **C1** | **C2** | **C3** |
|---|---|---|---|---|
| ML(1+4) à 100° C | 72,0 | 73,6 | 81,0 | 82,0 |
| Temps de grillage t5 (min.) à 135° C | 14,8 | 22,4 | 14,4 | 13,4 |
| Aptitude à l'extrusion | bonne | bonne | mauvaise | mauvaise |

| | | | | |
|---|---|---|---|---|
| « bonne » témoignait d'un aspect satisfaisant (lisse), d'une absence de trous, de craquelures ou fissures et pas de retrait de l'extrudât. « mauvaise » témoignait d'un aspect insatisfaisant, avec des trous, des craquelures ou fissures, et un retrait significatif de l'extrudât. | | | | |

Le tableau 4 ci-après présente les propriétés physiques et mécaniques des compositions réticulées obtenues I1 et C1-C3, mesurées comme indiqué ci-dessus sur des éprouvettes de type haltères.

**[Tableau 4]**

| | **I1** | **C1** | **C2** | **C3** |
|---|---|---|---|---|
| Résistivité électrique volumique (Ohm.cm) | 1,0.10⁹ | 2,4.10⁵ | 4,7.10⁸ | 1,3.10⁸ |
| Différence de conductivité ionique de l'eau pure après 2 semaines ΔC = Cf - Ci (µS/cm) | 7,2 | 5,1 | 6,2 | 8,2 |
| Dureté IRHD (points) | 65 | 65 | 65 | 69 |
| Contrainte à la rupture Cr (MPa) | 11,2 | 12,5 | 11,9 | 12,8 |
| Allongement à la rupture Ar (%) | 444 | 400 | 398 | 399 |

Les propriétés obtenues aux tableaux 3 et 4 montrent que la composition I1 selon l'invention présente, par rapport aux compositions témoin C1-C3 :
- à l'état réticulable : une aptitude à la mise en œuvre améliorée, comme le montrent la viscosité Mooney ML(1+4) minimale pour un temps de grillage t5 analogue et l'aspect visuel satisfaisant de l'extrudât avec une absence de trous, de craquelures et de retrait suite à l'extrusion, et
- à l'état réticulé : des propriétés physicochimiques et mécaniques également améliorées, avec notamment :
   une résistivité volumique maximale (1,0.10⁹ Ohm.cm environ) jointes à un relargage d'ions réduit vers le fluide à son contact, et
   des propriétés à la rupture améliorées pour une dureté analogue (voir l'allongement-rupture nettement amélioré pour une contrainte-rupture analogue).

Ces propriétés globalement améliorées sont dues en particulier aux fractions massiques spécifiques dans la composition selon l'invention :
- dudit noir de carbone (entre 28 % et 32%, contrairement aux fractions massiques de 35,29 % et 26,91 % utilisées dans les compositions C1-C3), et
- des autres ingrédients, dont notamment les fractions massiques de la matrice élastomère, de la charge inorganique lamellaire, du système d'aide à la mise en œuvre (comprenant l'agent de recouvrement et l'agent lubrifiant) et du système plastifiant.

Ces propriétés améliorées rendent les compositions selon l'invention particulièrement bien adaptées pour constituer en particulier :
- un tuyau monocouche ou au moins une couche interne d'un tuyau multicouche véhiculant de l'air humidifié, un liquide aqueux de refroidissement ou de l'eau ultrapure, en liaison avec une pile à combustible, et même
- tout ou partie d'un joint d'étanchéité, par exemple pour la carrosserie d'un véhicule automobile ou pour un bâtiment.

## Revendications

1. Composition de caoutchouc en particulier utilisable dans un tuyau (1, 10, 20, 30, 40) d'air humidifié, de liquide aqueux de refroidissement ou d'eau ultrapure relié à une pile à combustible (50), la composition étant à base d'au moins un élastomère choisi parmi les copolymères éthylène-propylène (EPM) et les terpolymères éthylène-propylène-diène (EPDM), et comprenant :
- une charge comprenant un noir de carbone et une charge inorganique lamellaire,
- un système d'aide à la mise en œuvre,
- un système plastifiant, et
- un système de réticulation comprenant un peroxyde,
dans laquelle la composition comprend, en fractions massiques :
28-32 % du noir de carbone, lequel est choisi parmi
les noirs de carbone de série ASTM N600 ou N700, et
les noirs de carbone présentant une surface spécifique BET de 15-25 m²/g, un indice d'adsorption d'iode de 16-24 mg/g selon la norme ASTM D1510, et un indice d'absorption de DBP de 90-110 mL/100 g selon la norme ASTM 2414-90,
10-20 % de la charge inorganique lamellaire,
1,0-6,0 % du système d'aide à la mise en œuvre, lequel comprend un agent de recouvrement du noir de carbone apte à se lier à des groupes fonctionnels acides dudit noir de carbone, et
10-22 % du système plastifiant.

2. Composition de caoutchouc selon la revendication 1, dans laquelle la composition comprend ledit au moins un élastomère qui est un EPDM selon une fraction massique de 25-40 %, la composition comprenant de préférence un mélange d'un premier EPDM et d'un second EPDM à taux massiques d'unités issues de l'éthylène de 48-52 % et de 66-70 %, respectivement,
et par exemple dans laquelle la fraction massique du premier EPDM et du second EPDM dans ledit mélange sont respectivement de 40-60 % et de 60-40 %.

3. Composition de caoutchouc selon une des revendications précédentes, dans laquelle ledit agent de recouvrement comprend un polyéthylène glycol, qui présente de préférence une masse moléculaire Mn moyenne en nombre inclusivement comprise entre 3000 et 5000 g/mol.

4. Composition de caoutchouc selon une des revendications précédentes, dans laquelle ledit système d'aide à la mise en œuvre comprend en outre au moins un agent lubrifiant par exemple choisi parmi des composés à base d'esters d'acides gras et par exemple des esters d'acides gras aliphatiques ayant de 14 à 22 atomes de carbone.

5. Composition selon une des revendications précédentes, dans laquelle la composition comprend le système d'aide à la mise en œuvre selon une fraction massique de 1,5-4,0 %, lequel est de préférence dépourvu d'agent d'activation du système de réticulation, la composition étant par exemple dépourvue d'oxyde de zinc et d'acide stéarique.

6. Composition de caoutchouc selon une des revendications précédentes, dans laquelle la charge inorganique lamellaire est choisie parmi les phyllosilicates et les talcs, et de préférence dans laquelle la charge inorganique lamellaire comprend un kaolin, un mica ou un talc qui est présent dans la composition selon une fraction massique de 12-18 %.

7. Composition de caoutchouc selon la revendication 6, dans laquelle la charge inorganique lamellaire est constituée d'un kaolin calciné, et/ou ledit noir de carbone est de série N600 ou bien présente ladite surface spécifique BET de 17-23 m²/g, ledit indice d'adsorption d'iode de 18-22 mg/g et ledit indice d'absorption de DBP de 95-105 mL/100 g.

8. Composition de caoutchouc selon une des revendications précédentes, dans laquelle la charge est dépourvue ;
- de charge inorganique non lamellaire, étant dépourvue de silice et de carbonate de calcium, et
- de charge inorganique lamellaire pourvue de groupes silanes.

9. Composition de caoutchouc selon une des revendications précédentes, dans laquelle la composition comprend le système plastifiant selon une fraction massique de 12-20 %, lequel comprend de préférence une huile présentant une viscosité cinématique à 100° C, mesurée selon la norme ASTM D 445, d'au moins 30 mm²/s.

10. Composition de caoutchouc selon une des revendications précédentes, dans laquelle la composition comprend le système de réticulation selon une fraction massique de 2,5-4,0 %, lequel comprend un peroxyde organique et un co-agent de réticulation, par exemple le triallyl cyanurate (TAC) ou le triallyl isocyanurate (TAIC).

11. Composition de caoutchouc selon une des revendications précédentes, dans laquelle la composition présente à l'état réticulé une résistivité volumique, mesurée selon la norme IEC 62631 3, qui est égale ou supérieure à 1,0.10⁸ Ohm.cm, de préférence égale ou supérieure à 1,0.10⁹ Ohm.cm.

12. Composition de caoutchouc selon une des revendications précédentes, dans laquelle, après vieillissement pendant 2 à 4 semaines à une température de 80° C par immersion d'échantillons constitués de ladite composition dans un volume d'un liquide aqueux choisi parmi l'eau ultrapure et les mélanges eau-éthylène glycol, avec un ratio surface de la plaque / volume du liquide aqueux imposé à 30 mm²/mL et les échantillons qui sont découpés avec un emporte-pièce de dimensions 40 x 60 mm dans une plaque d'épaisseur 2,0 ± 0,2 mm, le liquide aqueux présente une conductivité ionique finale Cf inférieure ou égale à sa conductivité ionique initiale Ci avant ladite immersion, augmentée de 10 µS/cm :
Cf - Ci ≤ 10 µS/cm, et de préférence Cf - Ci ≤ 8 µS/cm lorsque le liquide aqueux est de l'eau ultrapure.

13. Article en caoutchouc choisi parmi les tuyaux (1, 10, 20, 30, 40) de transfert sous pression d'un fluide liquide, gazeux ou supercritique et les joints d'étanchéité, dans lequel l'article comprend ou est constitué d'une composition de caoutchouc selon une des revendications précédentes, extrudée à l'état réticulable puis réticulée.

14. Article selon la revendication 13, dans lequel l'article est un tuyau (1, 10, 20, 30, 40) pour un circuit (60, 70, 80) relié à une pile à combustible (50) véhiculant de l'air humidifié, un liquide de refroidissement eau-éthylène glycol ou de l'eau ultrapure, et dans lequel le tuyau (1, 10, 20, 30, 40) est :
- monocouche, étant constitué de ladite composition de caoutchouc, ou
- multicouche, comprenant une couche radialement interne (11) constituée de ladite composition de caoutchouc, au moins une couche de renforcement (12) la surmontant, et une couche de couverture (13) radialement externe.

15. Article selon la revendication 14, dans lequel le tuyau (1, 10, 20, 30, 40) est configuré pour véhiculer un liquide aqueux constitué d'eau ultrapure ou d'un liquide de refroidissement eau-éthylène glycol, la composition de caoutchouc présentant à l'état réticulé une résistivité volumique, mesurée selon la norme IEC 62631 3, qui est égale ou supérieure à 1,0.10⁸ Ohm.cm, de préférence égale ou supérieure à 1,0.10⁹ Ohm.cm, et
après vieillissement par immersion d'échantillons constitués de ladite composition dans un volume du liquide aqueux pendant 2 à 4 semaines à une température de 80° C, avec un ratio surface de chaque échantillon / volume du liquide aqueux imposé à 30 mm²/mL et les échantillons qui sont découpés avec un emporte-pièce de dimensions 40 x 60 mm dans une plaque d'épaisseur 2,0 ± 0,2 mm, le liquide aqueux présentant une conductivité ionique finale Cf inférieure ou égale à sa conductivité ionique initiale Ci avant ladite immersion, augmentée de 10 µS/cm :
Cf - Ci ≤ 10 µS/cm, et de préférence Cf - Ci ≤ 8 µS/cm lorsque le liquide aqueux est de l'eau ultrapure.
